# EUROPÄISCHE PATENTSCHRIFT

(11) **EP 1 187 743 B1**
(45) Veröffentlichungstag und Bekanntmachung des Hinweises auf die Patenterteilung: **02.05.2007**
(21) Anmeldenummer: 00934974.7
(22) Anmeldetag: 29.04.2000
(51) Int. Cl.: B60S 1/08

(54) **REGENSENSOR ZUR DETEKTION VON FEUCHTIGKEITSTROPFEN**
RAIN SENSOR FOR DETECTING HUMIDITY DROPS
DETECTEUR DE PLUIE SERVANT A DETECTER DES GOUTTES D'HUMIDITE

(30) Priorität: 18.06.1999 DE 19927805; 18.04.2000 DE 10019112
(43) Veröffentlichungstag der Anmeldung: 20.03.2002
(73) Patentinhaber: Valeo Wischersysteme GmbH, 74321 Bietigheim-Bissingen (DE)
(72) Erfinder: REIME, Gerd, D-75328 Schömberg (DE)
(74) Vertreter: Croonenbroek, Thomas Jakob
(86) Internationale Anmeldenummer: PCT/EP2000/003889
(87) Internationale Veröffentlichungsnummer: WO 2000/078582

(56) Entgegenhaltungen:
- DE-A- 4 403 221
- US-A- 3 996 797

## Beschreibung

Die vorliegende Erfindung betrifft einen Regensensor zur Detektion von Feuchtigkeitstropfen innerhalb eines Bereichs auf einer lichtdurchlässigen Scheibe, mit mindestens einem Sendeelement zum Aussenden optischer Strahlen in die Scheibe und mit mindestens einem Empfangselement zum Empfangen zumindest eines Teils der ausgesandten optischen Strahlen, wobei die Intensität der empfangenen optischen Strahlen abhängig ist von der Anzahl der Feuchtigkeitstropfen in dem von dem Regensensor betrachteten Bereich der Scheibe.

Die Erfindung betrifft außerdem ein Verfahren zum Betrieb eines Regensensors zur Detektion von Feuchtigkeitstropfen innerhalb eines Bereichs auf einer lichtdurchlässigen Scheibe, mit mindestens einem Sendeelement zum Aussenden optischer Strahlen in die Scheibe und mit mindestens einem Empfangselement zum Empfangen zumindest eines Teils der ausgesandten optischen Strahlen, wobei die Intensität der empfangenen optischen Strahlen abhängig ist von der Anzahl der Feuchtigkeitstropfen in dem von dem Regensensor betrachteten Bereich der Scheibe.

Regensensoren der eingangs genannten Art sind in unterschiedlichen Ausführungsformen aus dem Stand der Technik bekannt. Sie werden üblicherweise in Kraftfahrzeugen eingesetzt, um eine automatische Steuerung der Scheibenwischerbetätigung in Abhängigkeit von der Intensität eines Niederschlags zu ermöglichen. Die Regensensoren betrachten in der Regel einen bestimmten Bereich der Windschutzscheibe und bestimmen die Intensität des Niederschlags in diesem Bereich.

Die bekannten Regensensoren weisen eines oder mehrere Sendeelemente auf, die optische Strahlen in den betrachteten Bereich der Scheibe aussenden. Die Sendeelemente sind bspw. als Lumineszenzdioden (Light-Emitting-Diodes, LEDs) ausgebildet. Die ausgesandten optischen Strahlen können im sichtbaren oder unsichtbaren Wellenlängenbereich liegen. Zumindest ein Teil der ausgesandten optischen Strahlen wird aus dem betrachteten Bereich auf eines oder mehrere Empfangselemente des Regensensors reflektiert. Die Empfangselemente sind bspw. als invers betriebene Lumineszenzdioden (LEDs) ausgebildet. Die Empfangselemente erzeugen ein Signal, das abhängig ist von der Intensität der empfangenen optischen Strahlen. Die Intensität der empfangenen optischen Strahlen ist wiederum abhängig von der Anzahl der Feuchtigkeitstropfen in dem von dem Regensensor betrachteten Bereich der Scheibe. Als Feuchtigkeitstropfen können bspw. Regentropfen, Tautropfen, Nebeltropfen, angeschmolzene Schneeflocken oder angetaute Hagelkörner detektiert werden.

Die Empfangselemente können bspw. die von der Scheibe ohne Feuchtigkeitstropfen reflektierten optischen Strahlen empfangen und registrieren eine Abnahme der Intensität der empfangenen optischen Strahlen beim Auftreten von Feuchtigkeitstropfen. Die Empfangselemente können aber auch nur die von den Feuchtigkeitstropfen reflektierten optischen Strahlen empfangen und registrieren eine Zunahme der Intensität der empfangenen optischen Strahlen beim Auftreten von Feuchtigkeitstropfen.

Es sind Regensensoren bekannt, die in einem Abstand zu der betrachteten Scheibe angeordnet sind. Die optischen Strahlen überwinden eine Luftstrecke von den Sendeelementen zu der Scheibe bzw. von der Scheibe zu den Empfangselementen. Derartige Regensensoren haben den Vorteil, dass sie einen relativ großen Bereich überwachen können und dass der betrachtete Bereich genau im Blickfeld des Fahrers des Kraftfahrzeugs gewählt werden kann, ohne dass die Sicht des Fahrers durch den Regensensor beeinträchtigt wird.

Eine andere Ausführungsform von Regensensoren wird mit Hilfe einer elastischen Klebeschicht unmittelbar auf der Scheibe in dem zu betrachtenden Bereich befestigt. Die Klebeschicht hat zum einen eine Befestigungsfunktion, um den Regensensor sicher auf der Scheibe zu befestigen, und zum anderen eine Ausgleichsfunktion, um Unebenheiten der Scheibe oder des Regensensors auszugleichen und den Regensensor ohne Lufteinschlüsse auf der Scheibe anzuordnen.

Die Klebeschicht besteht vorzugsweise aus Silikon und weist nahezu denselben Brechungsindex auf wie die zu betrachtende Scheibe. Die von den Sendeelementen in einem bestimmten Winkel in die Klebeschicht ausgesandten optischen Strahlen werden beim Übergang von der Klebeschicht in die zu betrachtende Scheibe nahezu nicht abgelenkt. An dem Übergang von der Scheibe zu der Umgebungsluft liegt jedoch ein relativ großer Unterschied der Brechungsindizes vor, so dass die optischen Strahlen an dem Übergang Scheibe/Luft zum großen Teil in Richtung der Empfangselemente totalreflektiert werden. Die Empfangselemente empfangen die totalreflektierten optischen Strahlen und erzeugen ein von der Intensität der empfangenen optischen Strahlen abhängiges Signal.

Wenn Feuchtigkeitstropfen auf der Scheibe angeordnet sind, ergibt sich im Bereich der Tropfen statt eines Übergangs Scheibe/Luft ein Übergang Scheibe/Tropfen, was zu einem veränderten Unterschied der Brechungsindizes im Bereich der Tropfen führt. An dem Übergang Scheibe/Tropfen werden die optischen Strahlen nicht mehr in Richtung der Empfangselemente totalreflektiert, sondern in andere Richtungen totalreflektiert oder treten sogar aus der Scheibe heraus in den Feuchtigkeitstropfen ein. Wenn sich Feuchtigkeitstropfen auf der Scheibe befinden, werden bei dieser Ausführungsform eines Regensensors also optische Strahlen mit einer geringeren Intensität empfangen und das Signal der Empfangselemente verändert sich entsprechend.

Die bekannten Regensensoren werden mit einer Versorgungsspannung, üblicherweise eine Gleichspannung, betrieben, die in dem Regensensor von einem Oszillator in ein Rechtecksignal mit einer bestimmten Frequenz zur Versorgung der Sendeelemente umgewandelt wird. Die Frequenz liegt im Bereich von mehreren kHz, bspw. bei 30 kHz. Die mit dem Rechtecksignal betriebenen Sendeelemente senden optische Strahlen mit der Frequenz des Rechtecksignals aus. Die Empfangselemente empfangen optische Strahlen und erzeugen ein Signal, das ebenfalls dieselbe Frequenz aufweist. Feuchtigkeitstropfen auf der zu betrachtenden Scheibe wirken sich durch eine Veränderung der Amplitude auf das Signal der Empfangselemente aus. Aus der Veränderung der Amplitude des Signals wird dann auf die Anzahl der Feuchtigkeitstropfen auf der Scheibe geschlossen. Das Rechtecksignal zur Versorgung der Sendeelemente kann also als ein Trägersignal bezeichnet werden, auf das ein von der Anzahl der Feuchtigkeitstropfen auf der Scheibe abhängiges Signal durch Verändern der Amplitude aufmoduliert wird.

Aus dem Stand der Technik sind schließlich auch Regensensoren bekannt, die zwei Messstrecken mit jeweils einem oder mehreren Sendeelementen aufweisen. Die Sendeelemente der beiden Messstrecken senden abwechselnd optische Strahlen aus. Das oder die Empfangselemente empfangen abwechselnd optische Strahlen, die von den Sendeelementen der einen und der anderen Messstrecke ausgesandt wurden. Die Signale der Empfangselemente werden einem vergleicher zugeführt, der aus der Differenz der Signale ein Ausgangssignal bildet. Das Ausgangssignal ist abhängig von der Veränderung der Amplitude des Signals der einen Messstrecke relativ zu der Amplitude des Signals der anderen Messstrecke. Wenn keine Feuchtigkeitstropfen in dem betrachteten Bereich auf der Scheibe anliegen, ist das Ausgangssignal des Vergleichers sozusagen ein Signal mit derselben Frequenz wie das Rechtecksignal zur Versorgung der Sendeelemente, aber mit einer Amplitude Null, ein Gleichspannungssignal also.

Ein solcher Regensensor wird in DE-A-4403221 beschrieben.

Die aus dem Stand der Technik bekannten Regensensoren haben den Nachteil, dass sie während des Betriebs elektromagnetische Wellen, insbesondere im Langwellenbereich, d. h. Oberwellen in einem Frequenzbereich von bis zu einigen Hundert kHz, abstrahlen. Das führt zu Störungen von Funkübertragungen, insbesondere in diesem Frequenzbereich. Die Störungen wirken sich besonders dann auf Funkübertragungen aus, wenn der Regensensor in der Nähe einer Empfangsantenne angeordnet ist, die für die Funkübertragung genutzt wird, so dass die störenden elektromagnetischen Wellen des Regensensors unmittelbar auf die Empfangsantenne wirken. Die störenden elektromagnetischen Wellen des bekannten Regensensors sind bspw. als ein kontinuierlicher Pfeifton in einem Radio des Kraftfahrzeugs zu hören. Ebenso können starke externe elektromagnetische Felder, die bspw. bei der Benutzung von Funktelefonen im Innenraum des Kraftfahrzeugs entstehen, zu einer Störung der Funktion des bekannten Regensensors führen.

Zur Information wird das Dokument US-A-3 996 797 zitiert, welches eine Vorrichtung zur Messung eines magnetischen Flusses beschreibt und ganz allgemein den Gehalt von Oberwellen in Rechtecksignalen erwähnt, jedoch aus einem sehr entfernten Gebiet der Technik stammt.

Es ist deshalb eine Aufgabe der vorliegenden Erfindung, einen Regensensor der eingangs genannten Art dahingehend auszugestalten und weiterzubilden, dass Störungen von Funkübertragungen durch den Regensensor wirksam verringert, nach Möglichkeit sogar ganz verhindert werden.

Zur Lösung dieser Aufgabe schlägt die Erfindung ausgehend von dem Regensensor der eingangs genannten Art vor, dass der Regensensor Mittel zum Erzeugen eines elektrischen Signals, das einen geringeren Oberwellenanteil als Rechtecksignale aufweist, vorzugsweise eines sinusförmigen elektrischen Signals, zur Versorgung des oder jeden Sendeelements des Regensensors aufweist. Die Mittel zum Erzeugen des elektrischen Signals mit einem geringen Oberwellenanteil sind bspw. als ein als Sinusgenerator ausgebildeter Oszillator ausgebildet.

Erfindungsgemäß ist erkannt worden, dass die von den bekannten Regensensoren abgestrahlten elektromagnetischen Wellen, die zu einer Störung von Funkübertragungen führen können, ihre Ursache in dem Rechtecksignal haben, das zur Versorgung der Sendeelemente des Regensensors eingesetzt wird. Die Rechtecksignale weisen einen relativ großen Oberwellenanteil auf. Die Oberwellen führen zu einer Abstrahlung der störenden elektromagnetischen Wellen. Aus diesem Grund werden die Sendeelemente des Regensensors gemäß der vorliegenden Erfindung mit einem elektrischen Signal, das einen geringeren Oberwellenanteil aufweist als Rechtecksignale, idealerweise mit einem sinusförmigen Signal, versorgt. Zur Erzeugung des elektrischen Signals weist der Regensensor entsprechende Mittel, vorzugsweise einen Sinusoszillator, auf. Der Oszillator wandelt ein an dem Regensensor anliegendes Versorgungssignal, vorzugsweise eine Gleichspannung, in das sinusförmige Signal um. Auch sämtliche in dem Regensensor verarbeiteten Signale sollten nahezu oberwellenfrei sein.

Die elektrischen Signale mit einem geringen Oberwellenanteil könnten theoretisch durch einen Mikroprozessor erzeugt werden. Allerdings arbeitet ein Mikroprozessor intern mit Rechtecksignalen, die elektromagnetische Wellen erzeugen und zu einer Störung von Funkübertragungen führen würden. Ein Mikroprozessor wäre also nicht zur Lösung der Aufgabe geeignet. Aus diesem Grund wird erfindungsgemäß eine besondere elektrische Schaltung vorgeschlagen, die auf Rechtecksignale vollkommen verzichtet.

Der erfindungsgemäße Regensensor strahlt während des Betriebs - wenn überhaupt - nur elektromagnetische Oberwellen mit einer äußerst geringen Leistung aus. Dadurch können Störungen von Funkübertragungen - selbst wenn der Regensensor in der Nähe einer Empfangsantenne angeordnet ist - wirksam vermindert bzw. sogar ganz verhindert werden. Mit dem erfindungsgemäßen Regensensor kann eine Oberwellenkompression von bis zu -60dB im Vergleich zu den bekannten Regensensoren, die mit Rechtecksignalen betrieben werden, erzielt werden.

Des Weiteren ist der erfindungsgemäße Regensensor äußerst störungsempfindlich gegenüber externen elektromagnetischen Feldern, da ein Verstärker auf der Empfängerseite derart ausgelegt werden kann, dass nur die Grundwelle des Signals verstärkt wird. Die Oberwellenanteile oberhalb der zu verstärkenden Grundwelle können durch geeignete Filterelemente rausgefiltert werden und werden somit nicht verstärkt. Die Oberwellenanteile eines rechteckförmigigen Fremdsignales werden von dem erfindungsgemäßen Regensensor also nicht mehr erfasst.

Das sinusförmige elektrische Signal kann als ein Strom oder als eine Spannung ausgebildet sein. Die Versorgung der Sendeelemente mit einem sinusförmigen elektrischen Signal hat die angegebenen Vorteile unabhängig von der Ausführungsform des Regensensors. Der erfindungsgemäße Regensensor muss an einen Betrieb mit einem sinusförmigen elektrischen Signal angepasst werden, um eine ordnungsgemäße und zuverlässige Funktion des Regensensors sicherzustellen zu können. Die Anpassung ist aufgrund der unterschiedlichen Charakteristika von Rechtecksignalen und Sinussignalen erforderlich.

Durch einige konstruktive Veränderungen des erfindungsgemäßen Regensensors gegenüber den bekannten Regensensoren, die mit Rechtecksignalen betrieben werden, kann die Störung externer Funkübertragungen durch von dem Regensensor ausgesandte störende elektromagnetische Wellen und die Störung des Regensensors selbst durch externe elektromagnetische Felder weiter reduziert werden.

Gemäß einer vorteilhaften Weiterbildung der vorliegenden Erfindung wird vorgeschlagen, dass der Regensensor mehrere Sendeelemente, die zwei Messstrecken zugeordnet sind, und einen Vergleicher zum Vergleich der Intensität der von dem oder jedem Empfangselement empfangenen optischen Strahlen der beiden Messstrecken relativ zueinander aufweist. Die Messstrecken umfassen jeweils einen Sendekreis und einen Empfangskreis. Das oder die Empfangselemente empfangen zumindest einen Teil der von den Sendeelementen ausgesandten optischen Strahlen (die an einem Tropfen auf der Windschutzscheibe reflektierten oder gebrochenen Strahlen) und erzeugen zwei zeitmultiplexte elektrische Signale, deren Amplituden abhängig sind von der Intensität der empfangenen optischen Signale. Somit ist die Amplitude der elektrischen Signale ein Mass für die Intensität der von dem oder jedem Empfangselement empfangenen optischen Strahlen. Zum Vergleich der Intensität der empfangenen optischen Strahlen werden dem Vergleicher die zeitmultiplexten elektrischen Signale zugeführt, deren Amplituden er miteinander vergleicht.

Durch den Vergleich der Intensität der empfangenen optischen Strahlen, die von den Sendeelementen der einen oder der anderen Messstrecke ausgesandt wurden, ergibt sich als Hinweis auf die Anzahl der Feuchtigkeitstropfen auf der Scheibe kein absolutes, sondern ein relatives Ausgangssignal am Ausgang des Vergleichers (sog. differentielle Messung). Wenn Feuchtigkeitstropfen auf der betrachteten Scheibe liegen, verändert sich die Amplitude der beiden elektrischen Signale der Empfangselemente. Wenn keine Feuchtigkeitstropfen auf der Scheibe liegen oder bei zueinander ausgeregelten Amplituden der beiden Sendeelemente des Regensensors sind die beiden Signale gleich. Wenn dann durch den Vergleicher die Differenz der beiden Signale gebildet wird, ergibt sich am Ausgang des Vergleichers ein Ausgangssignal mit der Amplitude Null. Sobald Feuchtigkeitstropfen auf der Scheibe liegen, weist das Ausgangssignal eine von der Anzahl der Feuchtigkeitstropfen abhängige Amplitudenabweichung von Null auf. Null kann in diesem Fall auch eine vorgebbare Referenzspannung sein.

Außerdem kann eine Phasenschieberschaltung zur Einstellung eines bestimmten Werts für die Phasenverschiebung der beiden sinusförmigen elektrischen Versorgungssignale vorgesehen werden. Die Phasenverschiebung der beiden Signale beträgt vorzugsweise 180 . Die Sendeelemente der beiden Messstrecken werden also entgegengesetzt zueinander betrieben, d. h. wenn die Sendeelemente der einen Messstrecke am hellsten sind, sind die Sendeelemente der anderen Messstrecke am dunkelsten.

Gemäß einer anderen vorteilhaften Weiterbildung der vorliegenden Erfindung wird vorgeschlagen, dass der Regensensor einen ersten Regler zur Regelung der Amplitude der einzelnen sinusförmigen gesendeten elektrischen Signale derart, dass das Ausgangssignal des Vergleichers einen vorgebbaren Wert (z. B. Null) annimmt, aufweist. Zum Verstellen der Amplituden der sinusförmigen elektrischen Signale sind in den Sendekreisen Stellglieder für die sinusförmige Sendeleistung für die Sendedioden angeordnet, die von dem ersten Regler angesteuert werden. Der erste Regler erfasst das Ausgangssignal des Vergleichers und bildet entsprechende Signalgrößen zur Ansteuerung der Stellglieder. Der erste Regler ist vorzugsweise als ein PID-Regler ausgebildet und weist ein gedämpftes Einschwingverhalten (Einschwingzeit etwa 2 - 3 Sekunden) auf. Die Einschwingzeit des Regelkreises ist aber so schnell, dass bei dem erfindungsgemäßen Regensensor auf eine gesonderte Power-On-Schaltung verzichtet werden kann. Diese Regelung durch den ersten Regler ist notwendig, um die differentielle Messung zu ermöglichen. Der Regelkreis des ersten Reglers umfasst nahezu den gesamten Regensensor mit der Kopplung des Sendekreises mit dem Empfangskreis durch die optischen Strahlen. Der erste Regler regelt die beiden Messstrecken zueinander aus.

Vorteilhafterweise weist der Regensensor Mittel zur Temperaturkompensation auf. Diese Mittel kompensieren die Auswirkungen von Temperaturschwankungen auf die Erzeugung der Amplituden der sinusförmigen, um 180° verschobenen elektrischen Signale in den beiden Messstrecken. Eine Temperaturänderung in dem Regensensor führt ohne Regelung zu einer Veränderung der Verstärkungsfaktors des Oszillators, was eine Änderung der Amplitude des sinusförmigen Signals nach sich zieht. Mit der Regelung wird eine Temperaturänderung kompensiert. Da sich das sinusförmige Signal innerhalb eines durch eine obere Grenze und eine untere Grenze begrenzten Bereichs befinden muss, damit der Regensensor ordnungsgemäß und zuverlässig arbeitet, müsste der Teil der Spitzen des Sinussignals abgehackt werden, der diesen Bereich überschreitet. Das bliebe bei einem als Rechtecksignal ohne negative Auswirkungen auf die Funktionsfähigkeit des Regensensors, da ein abgehacktes Rechtecksignal nach wie vor ein Rechtecksignal darstellt. Wenn jedoch, wie bei dem erfindungsgemäßen Regensensor, ein Sinussignal zur Versorgung der Sendeelemente eingesetzt wird, würde das Sinussignal mit abgehackten Spitzen einen Verlauf aufweisen, der dem eines Rechtecksignals ähnlich ist. Das abgehackte Sinussignal hätte relativ starke Oberwellen. In der Folge würde der mit dem abgehackten Sinussignal betriebene Regensensor Störungen von Funkübertragungen verursachen.

Gemäß einer anderen vorteilhaften Weiterbildung der Erfindung wird vorgeschlagen, dass der Regensensor einen weiteren Regler zur gemeinsamen Regelung beider Amplituden der sinusförmigen elektrischen Signale derart, dass zumindest eines der elektrischen Signale stets die maximale Amplitude hat, aufweist. Der Regelkreis mit dem weiteren Regler ist dem Regelkreis mit dem ersten Regler überlagert. Der weitere Regler wirkt ebenfalls auf in den Sendekreisen angeordnete Stellglieder zum Verändern der Amplitude der sinusförmigen elektrischen Signale.

Im Idealzustand - bei trockener Scheibe und Symmetrie der beiden Messstrecken - weisen die sinusförmigen elektrischen Signale beider Messstrecken eine Amplitude von 100% auf. Falls ein Tropfen in den Messbereich des Regensensors auf die Windschutzscheibe trifft, führt dies zu einer Veränderung der Intensität eines der von dem Empfangselement empfangenen optischen Strahlen, zu einer Veränderung der Amplitude des entsprechenden elektrischen Ausgangssignals des Empfangselements und letzten Endes zu einer Abweichung des Ausgangssignals des Vergleichers von dem vorgegebenen Wert. Diese Abweichung wird detektiert. Um das Ausgangssignal wieder auf den konstanten Wert zu regeln, tritt der erste Regler in Aktion und erhöht die Amplitude des einen sinusförmigen elektrischen Signals (z. B. auf 105%) während die Amplitude des anderen Signals erniedrigt wird (z. B. auf 95%). Da eine Amplitude größer 100% jedoch zu einer Begrenzung des Signals und damit zu Oberwellen führt, tritt der weitere Regler in Aktion und regelt die erhöhte Amplitude von 105% auf 100% (die andere Amplitude liegt dann bei 90%). Durch den weiteren Regler kann der Wirkungsgrad des erfindungsgemäßen Regensensors entscheidend erhöht werden, indem immer mindestens eine der Messstrecken mit dem maximalen Wirkungsgrad von 100% arbeitet. Zudem wird mit Hilfe des Weiteren Reglers verhindert, dass das Sinussignal in eine obere Begrenzung läuft. Dadurch wird stets ein Verlauf des Sinussignals mit einem möglichst geringen Oberwellenanteil sichergestellt.

Gemäß einer bevorzugten Ausführungsform der vorliegenden Erfindung wird vorgeschlagen, dass der Regensensor ein Empfangselement zum Empfangen zumindest eines Teils der von dem oder jedem Sendeelement ausgesandten optischen Strahlen aufweist. Beim Einsatz von mehreren, in zwei Messstrecken zusammengefassten Sendeelementen und lediglich einem Empfangselement in dem Regensensor, empfängt das Empfangselement abwechselnd optische Strahlen, die von den Sendeelementen der einen Messstrecke und der anderen Messstrecke ausgesandt wurden. Das Empfangselement empfängt die optischen Strahlen also im Zeitmultiplexverfahren (sog.

Time-Division-Multiple-Access, TDMA). Der Einsatz lediglich eines Empfangselements hat den Vorteil, dass Veränderungen oder Störungen im Empfangsbereich des Regensensors sich auf die von den Empfangselementen erzeugten Signale beider Messstrecken gleichermaßen auswirken. Da die beiden Messstrecken genau entgegengesetzt zueinander betrieben werden, kompensieren sich die Veränderungen und Störungen und sind in dem Ausgangssignal des Vergleichers nicht mehr enthalten.

Gemäß einer bevorzugten Ausführungsform der Erfindung wird vorgeschlagen, dass der Regensensor einen Fensterdiskriminator zur Detektion von Abweichungen des Ausgangssignals des Vergleichers von dem konstanten Wert und zur Ausgabe eines entsprechenden Ausgangssignals des Regensensors aufweist. Der Fensterdiskriminator hat die Aufgabe, aus dem Ausgangssignal des Vergleichers ein Ausgangssignal des Regensensors zu bilden, das dann in bekannter Weise von einem Steuergerät des Kraftfahrzeugs oder anderweitig ausgewertet werden kann. Das Ausgangssignal des Vergleichers hat eine von der Anzahl und Größe der Feuchtigkeitstropfen auf der Scheibe abhängige Amplitude und Auftrittshäufigkeit. Das Ausgangssignal des Fensterdiskriminators kann ein Rechtecksignal sein, das zwischen einem HI-Pegel und einem LO-Pegel schwankt. Die Störwirkung dieses Rechtecksignals ist äußerst gering, da es eine relativ niedrige Frequenz und eine geringe Leistung aufweist. Das Ausgangssignal des Fensterdiskriminators wird insbesondere hinsichtlich seiner Frequenz und des PulsPausen-Verhältnisses ausgewertet.

Vorteilhafterweise weist der Regensensor einen Synchrondemodulator auf, der das von dem Empfangselement empfangene Signal in zwei Differenzsignale aufteilt, wobei jedes der Signale bestimmte Halbwellen des empfangenen Signals umfasst. Zwischen dem Empfangselement und dem Synchrondemodulator kann ein Verstärker angeordnet sein, so dass der Synchrondemodulator das verstärkte empfangene Signal in zwei Differenzsignale aufteilt. An den Synchrondemodulator wird vorzugsweise das von dem Oszillator generierte Sinussignal geführt, damit der Synchrondemodulator die genaue Periodendauer der Sinussignale kennt und so das empfangene Signal in ein Differenzsignal, das der ersten Messstrecke zuzuordnen ist, und in ein Differenzsignal, das der zweiten Messstrecke zuzuordnen ist, unterteilen kann.

Gemäß einer bevorzugten Ausführungsform der vorliegenden Erfindung wird vorgeschlagen, dass der Regensensor acht Sendeelemente aufweist, die zu zwei Messstrecken zusammengefasst sind und um ein zentral angeordnetes Empfangselement in einem bestimmten Radius zueinander angeordnet sind. Vorzugsweise sind die Sendeelemente mit gleich großen Winkelabständen zueinander angeordnet. Die Sendeelemente der beiden Messstrecken sind vorzugsweise alternierend angeordnet, d. h. ein Sendeelement der einen Messstrecken neben einem Sendeelement der anderen Messstrecke. Das oder jedes Sendeelement ist vorteilhafterweise als eine Lumineszenzdiode (LED) ausgebildet. Ebenso ist das oder jedes Empfangselement als eine Lumineszenzdiode (LED) ausgebildet. Die optischen Strahlen, die von den Sendeelementen ausgesandt werden, sind vorzugsweise als Infrarot (IR)-Strahlen ausgebildet.

Es ist eine weitere Aufgabe der vorliegenden Erfindung, ein Verfahren der eingangs genannten Art dahingehend auszugestalten und weiterzubilden, dass Störungen von Funkübertragungen durch den Regensensor wirksam verringert, nach Möglichkeit sogar ganz verhindert werden.

Zur Lösung dieser Aufgabe schlägt die Erfindung ausgehend von dem Verfahren der eingangs genannten Art vor, dass das oder jedes Sendeelement des Regensensors von einem elektrischen Signal, das einen geringeren Oberwellenanteil als Rechtecksignale aufweist, versorgt wird. Das oder jedes Sendeelement des Regensensors wird vorteilhafterweise von einem sinusförmigen elektrischen Signal versorgt.

Gemäß einer vorteilhaften Weiterbildung der Erfindung wird vorgeschlagen, dass alle Signale in dem Regensensor als Signale mit einem geringeren Oberwellenanteil als Rechtecksignale ausgebildet sind. Alle Signale in dem Regensensor sind vorteilhafterweise als sinusförmige Signale ausgebildet.

Im Folgenden wird anhand der Zeichnungen ein bevorzugtes Ausführungsbeispiel der vorliegenden Erfindung näher erläutert. Es zeigen:
- Figur 1: einen erfindungsgemäßen Regensensor gemäß einer bevorzugten Ausführungsform im Schnitt;
- Figur 2: den Regensensor aus Figur 1 in einer Draufsicht;
- Figur 3: einen schematischen Aufbau eines erfindungsgemäßen Regensensors gemäß einer ersten bevorzugten Ausführungsform;
- Figur 4: einen schematischen Aufbau eines erfindungsgemäßen Regensensors gemäß einer zweiten bevorzugten Ausführungsform;
- Figur 5: einen Schaltplan des Regensensors aus Figur 4;
- Figur 6: einen Energieverlauf der sinusförmigen Spannungssignale von zwei Messstrecken des erfindungsgemäßen Regensensors; und
- Figur 7: einen Energieverlauf der Spannungssignale von zwei Messstrecken eines aus dem Stand der Technik bekannten Regensensors.

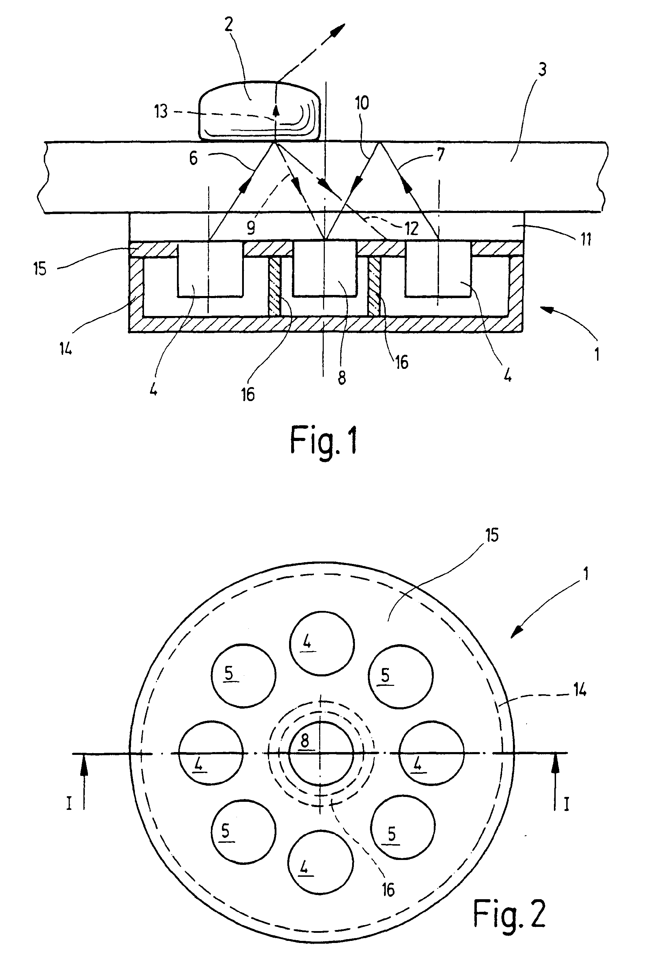

In Figur 1 ist ein erfindungsgemäßer Regensensor gemäß einer bevorzugten Ausführungsform in seiner Gesamtheit mit dem Bezugszeichen 1 gekennzeichnet. Der Regensensor 1 dient zur Detektion von Feuchtigkeitstropfen 2, insbesondere von Regentropfen, innerhalb eines bestimmten Bereichs auf einer lichtdurchlässigen Scheibe 3. Der Regensensor 1 wird vorzugsweise in einem Kraftfahrzeug eingesetzt, um die Anzahl der Feuchtigkeitstropfen 2 auf der Windschutzscheibe des Kraftfahrzeugs zu messen und in Abhängigkeit von der Anzahl der Feuchtigkeitstropfen 2, d. h. von der Intensität eines Niederschlags, die Scheibenwischerbetätigung zu steuern.

Der Regensensor 1 weist acht Sendeelemente 4, 5 zum Aussenden optischer Strahlen 6, 7 in die Scheibe 3 auf. Die Sendeelemente 4, 5 sind in einem gleichmäßigen Winkelabstand kreisförmig um ein zentral angeordnetes Empfangselement 8 herum angeordnet. Das Empfangselement 8 dient zum Empfangen von optischen Strahlen 9, 10. Die Intensität der empfangenen optischen Strahlen 9, 10 ist abhängig von der Anzahl der Feuchtigkeitstropfen 2 in dem von dem Regensensor 1 betrachteten Bereich der Scheibe 3.

Der Regensensor 1 ist mittels einer Klebeschicht 11, die vorzugsweise aus Silikon besteht, auf der Innenseite der Scheibe 3 befestigt. Die Klebeschicht 11 hat zum einen eine Befestigungsfunktion, um den Regensensor 1 sicher an der Scheibe 3 zu befestigen, und zum anderen eine Ausgleichsfunktion, um Unebenheiten der Scheibe 3 oder des Regensensors 1 auszugleichen und den Regensensor 1 ohne Lufteinschlüsse auf der Scheibe 3 anzuordnen. Die Klebeschicht 11 weist in etwa denselben Brechungsindex auf wie die Scheibe 3. Die Sendeelemente 4, 5 senden optische Strahlen 6, 7 aus, die durch die Klebeschicht 11 verlaufen und den Übergang Klebeschicht 11/Scheibe 3 nahezu ungebrochen passieren.

Wenn auf der Außenseite der Scheibe 3 kein Feuchtigkeitstropfen 2 angeordnet ist, werden die ausgesandten optischen Strahlen 7 an dem Übergang Scheibe 3/Luft aufgrund der unterschiedlichen Brechungsindizes in Richtung des Empfangselements 8 totalreflektiert. Wenn dagegen auf der Außenseite der Scheibe 3 ein Feuchtigkeitstropfen 2 angeordnet ist, wird aus dem ursprünglichen Übergang Scheibe 3/Luft ein Übergang Scheibe 3/Feuchtigkeitstropfen 2. Aufgrund der veränderten Brechungsindizes ergibt sich an dem Übergang Scheibe 3/Feuchtigkeitstropfen 2 ein verändertes Reflexionsverhalten. Nun wird nur ein geringer Teil 9 der ausgesandten optischen Strahlen 6 in Richtung des Empfangselements 8 reflektiert. Ein anderer Teil 12 der ausgesandten Strahlen 6 wird neben das Empfangselement 8 reflektiert und noch ein anderer Teil 13 der ausgesandten Strahlen 6 tritt aus der Scheibe 3 heraus und unter Brechung in den Feuchtigkeitstropfen 2 ein. Wenn also ein Feuchtigkeitstropfen 2 in dem betrachteten Bereich auf der Scheibe 3 angeordnet ist, weisen die von dem Empfangselement 8 empfangenen optischen Strahlen 9 eine geringere Intensität auf als ohne Feuchtigkeitstropfen 2 auf der Außenseite der Scheibe 3.

Die Sendeelemente 4, 5 sind als Lumineszenzdioden (Light-Emitting-Diodes, LEDs) ausgebildet. Die ausgesandten optischen Strahlen 6, 7 und damit auch die empfangenen optischen Strahlen 9, 10 können im sichtbaren oder unsichtbaren Frequenzbereich liegen. In dem vorliegenden Ausführungsbeispiel liegen sie im Infrarot (IR)-Bereich. Das Empfangselement 8 ist ebenfalls als eine Lumineszenzdiode (LED) ausgebildet.

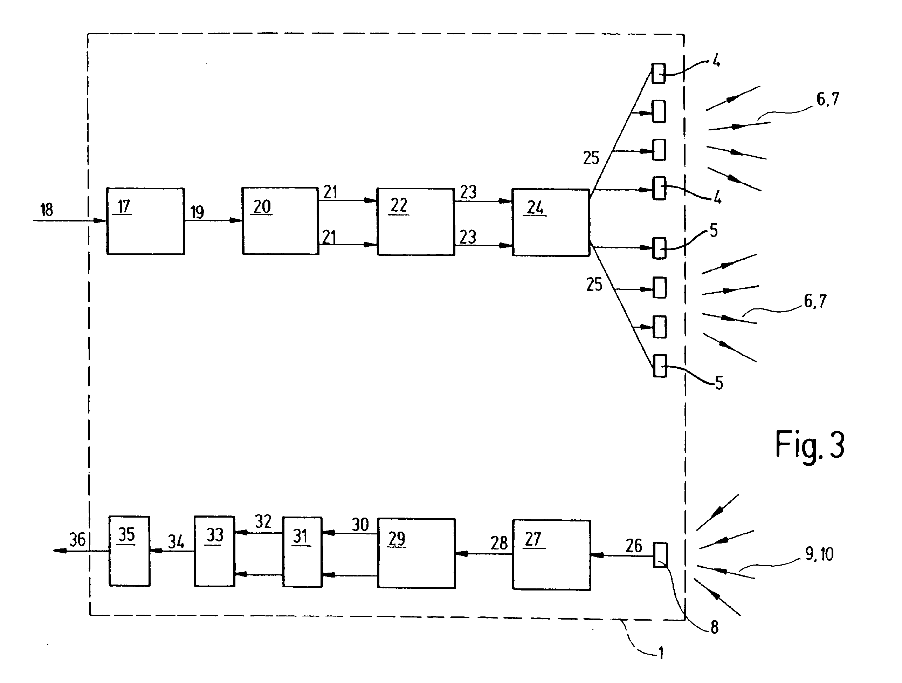

Die Sendeelemente 4, 5 sind in zwei Messstrecken aufgeteilt. Eine Messstrecke umfasst einen Sendekreis und einen Empfangskreis. Der eine Sendekreis enthält die Sendeelemente 4 und der andere Sendekreis die Sendeelemente 5. Die Sendeelemente 4 sind alternierend mit den Sendeelementen 5 um das Empfangselement 8 herum angeordnet (vgl. Figur 2). Die Sendeelemente 4, 5 werden mit sinusförmigen Spannungssignalen 25 versorgt. Dazu wird in einem Oszillator 17 (vgl. Figur 3) aus einer an dem Regensensor 1 anliegenden Versorgungsgleichspannung 18 ein sinusförmiges Spannungssignal 19 erzeugt. Das Sinussignal 19 wird mittels des Spannungsteilers 20 in zwei sinusförmige Spannungssignale 21, 21 aufgeteilt, um die Sendeelemente 4, 5 der beiden Sendekreise zu versorgen. Anschließend werden die Amplituden der beiden sinusförmigen Spannungssignale 21, 21 durch einen Regler 22 in Abhängigkeit von der Temperatur in dem Regensensor 1 auf einen konstanten Wert innerhalb des zulässigen Bereichs der Sinussignale 21, 21 des Regensensors 1 geregelt. Die auf einen konstanten Amplitudenwert geregelten Sinussignale 23 werden dann durch eine Phasenschieberschaltung 24 auf eine Phasenverschiebung von 180 Winkelgrad relativ zueinander geregelt. Am Ausgang der Phasenschieberschaltung 24 liegen die um 180 Winkelgrad phasenverschobenen Sinussignale 25 an.

Die Sendeelemente 4 des einen Sendekreises werden also genau entgegengesetzt von den Sendeelementen 5 des anderen Sendekreises betrieben. Wenn die Sendeelemente 4 ihre größte Helligkeit aufweisen, weisen die Sendeelemente 5 ihre größte Dunkelheit auf. Die Sinussignale 19, 21, 21, 23, 25 haben alle dieselbe Frequenz, die in etwa im kHz-Bereich, bei dem vorliegenden Ausführungsbeispiel im Bereich von 15 bis 20kHz, liegt. Die Sendeelemente 4, 5 senden optische Strahlen 6, 7 aus.

Das Empfangselement 8 empfängt abwechselnd optische Strahlen 9, 10, die von den Sendeelementen 4 des einen Sendekreises und von den Sendeelementen 5 des anderen Sendekreises ausgesandt wurden. Am Ausgang des Empfangselements 8 wird ein Signal 26 erzeugt, das zunächst in einem Vorverstärker 27 verstärkt wird.

Das in dem Vorverstärker 27 verstärkte Signal 28 wird an einen Synchrondemodulator 29 weitergeleitet, der das verstärkte sinusförmige Signal 28 mit sinusförmiger Ansteuerung synchron demoduliert. Die Amplituden der demodulierten Signale 30, 30 sind abhängig von der Intensität der empfangenen optischen Strahlen 9, 10. Die Intensität der empfangenen optischen Strahlen 9, 10 ist wiederum abhängig von der Anzahl der Feuchtigkeitstropfen 2 in dem von dem Regensensor 1 betrachteten Bereich der Scheibe 3.

Die demodulierten Signale 30, 30 werden an einen Regler 31 weitergeleitet, der die beiden Messstrecken zueinander ausregelt. Der Regler 31 ist als ein PID-Regler ausgebildet. Die Signale 32, 32 des Reglers 31 werden einem Vergleicher 33 zugeführt, der aus der Differenz des von dem einen Sendekreis empfangenen Signals 32 und des von dem anderen Sendekreis empfangenen Signals 32 ein Ausgangssignal 34 bildet. Das Ausgangssignal 34 ist also abhängig von der Veränderung der Amplituden der Signale 32, 32 der Sendekreise. Wenn keine Feuchtigkeitstropfen 2 in dem betrachteten Bereich auf der Scheibe 3 anliegen, ist das Ausgangssignal 34 des Vergleichers 33 sozusagen ein Signal mit derselben Frequenz wie das Sinussignal 25 zur Versorgung der Sendeelemente 4, 5, aber mit einer Amplitude Null, ein Gleichspannungssignal also.

Das Ausgangssignal 34 des Vergleichers 33 wird an einen Fensterdiskriminator 35 geleitet, der das Ausgangssignal 34 in ein Ausgangssignal 36 des Regensensors 1 umwandelt. Das Ausgangssignal 36 wechselt den Pegel, wenn das Signal 34 ein vorgegebenes Fenster verlässt. Als Ausgangssignal 36 ergibt sich ein Rechtecksignal, dessen Frequenz und Puls-Pausen-Verhältnis ausgewertet werden. Es ist denkbar, das Ausgangssignal des Ausgangsdiskriminators 35 durch einen Ausgangstreiber (nicht dargestellt), z. B. einen Transistor in open-collector-Schaltung zu invertieren, so dass das Ausgangssignal 36 des Regensensors 1 das invertierte Ausgangssignal des Fensterdiskriminators 35 ist.

Der Regensensor 1 weist ein lichtundurchlässiges Gehäuse 14 auf, in dem die Sendeelemente 4, 5, die Empfangselemente 8 und die Steuerungselektronik 17, 20, 22, 24, 27, 29, 31, 33, 35 angeordnet ist. Das Gehäuse 14 ist mit einem Deckel 15 lichtdicht verschlossen. In dem Deckel 15 sind Öffnungen für die Sendeelemente 4, 5 und das Empfangselement 8 ausgebildet. Die Sendeelemente 4, 5 und das Empfangselement 8 sind lichtdicht in die Öffnungen eingepasst. Das Empfangselement 8 ist durch einen Ring 16 aus einem elastischen, lichtdichten Material, vorzugsweise aus Gummi, gegen die Sendeelemente 4, 5 lichtdicht abgeschottet. Dadurch wird verhindert, dass optische Strahlen unmittelbar von den Sendeelmenten 4, 5 in das Empfangselement 8 gelangen, ohne von der Scheibe 3 reflektiert worden zu sein.

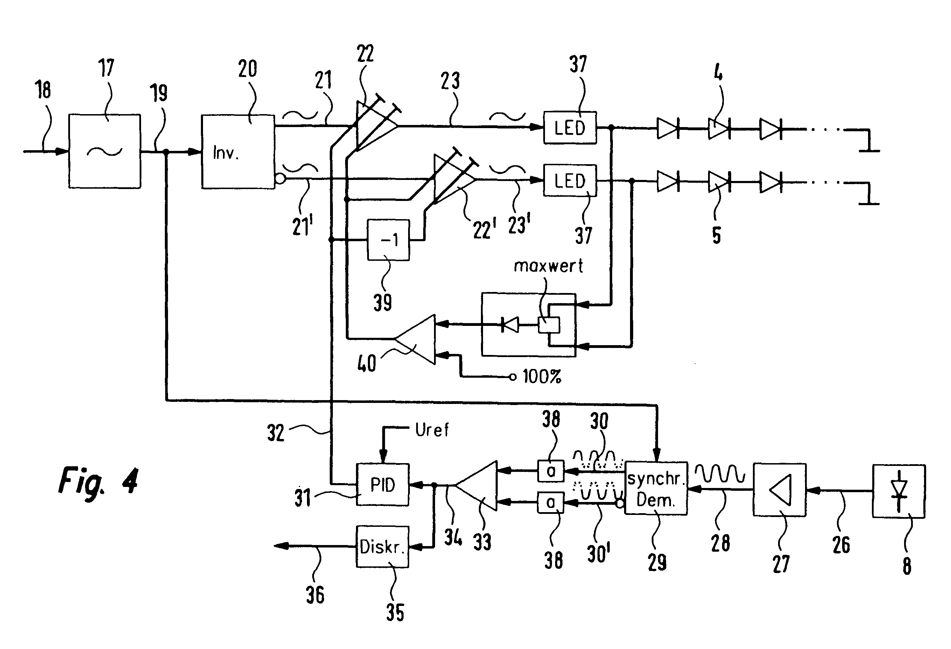

Eine weitere Ausführungsform des erfindungsgemäßen Regensensors 1 ist in Figur 4 schematisch dargestellt. Der Oszillator 17 ist als ein Sinusgenerator ausgebildet. Der Spannungsteiler 20 teilt das Signal 19 des Oszillators 17 in zwei gleich große Spannungen 21, 21 auf, von denen eine Spannung (21) mit inverser Phase zu dem anderen Signal 21 erzeugt wird. Die Amplitude der Spannungssignale 21, 21 wird jeweils durch ein Stellglied 22, 22 einer Amplitudenregelung auf einen vorgebbaren Amplitudenwert geregelt. Die geregelten Sinussignale 23 werden dann über Treiber 37 an die als Light-Emitting-Diodes (LEDs) ausgebildeten Sendeelemente 4, 5 geleitet, die optische Strahlen 6, 7 im Infrarot (IR)-Bereich aussenden.

Die von der Windschutzscheibe auf das Empfangselement 8 reflektierten oder gebrochenen optischen Strahlen 9, 10 werden von diesem empfangen und in ein elektrisches Signal 26 umgewandelt. Das Signal 26 wird durch den Verstärker 27 verstärkt. Der Verstärker 27 hat ein Bandpassverhalten, bei dem die Mittenfrequenz im Bereich der ausgesendeten Frequenz liegt. Das verstärkte Signal 28 wird in einem Synchrondemodulator 29 demoduliert, d. h. das verstärkte Signal 28 wird in zwei Differenzsignale 30, 30 aufgeteilt, wobei jedes der Signale 30, 30 bestimmte Halbwellen des verstärkten Signals 28 umfasst. Zur Steuerung wird dem Synchrondemodulator 29 das von dem Oszillator 17 erzeugte sinusförmige Spannungssignal 19 zugeführt. Die Differenzsignale 30, 30 werden jeweils in einem Integrator 38 aufintegriert und einem Vergleicher 33 zugeführt. Das Ausgangssignal 34 des Vergleichers 33 ist aufgrund der Differenzbildung unabhängig von Einflüssen durch Fremdlicht auf die Signalamplituden der beiden Messstrecken.

Das Ausgangssignal 34 des Vergleichers 33 wird von dem PID-Regler 31 auf eine Referenzspannung U_ref, z.B. 0,5 x Versorgungsspannung (U/2), geregelt. Dazu wird das Ausgangssignal 32 des PID-Reglers 31 an die Stellglieder 22, 22 geführt, wobei die beiden Stellglieder 22, 22 invers angesteuert werden, was durch den Inverter 39 verdeutlicht ist. Das bedeutet, dass, wenn die Amplitude des einen Spannungssignals 21 zunimmt, die Amplitude des anderen Spannungssignals 21 abnimmt. Durch die Regelung (PID-Regler 31 und Stellglieder 22, 22 werden im Normalzustand, d. h. bei trockener Windschutzscheibe, die beiden LED-Ausgangsleistungen so ausgeregelt, dass nach der Synchrondemodulation im Synchrondemodulator 29 die Amplituden am Eingang des Vergleichers 33 gleich groß sind. Durch die Regelung können außerdem Alterungserscheinungen der Bauelemente des Regensensors 1 ausgeregelt werden. Das Ausgangssignal 32 des PID-Reglers 31 stellt die Regelgröße für die Stellglieder 22, 22 dar, und das Ausgangssignal 34 des Vergleichers 33 stellt die Signalgröße der Regelung dar.

Die Spannungssignale 21, 21 werden zusätzlich noch durch einen weiteren Regler 40 derart geregelt, dass zumindest eines der Spannungssignale 21, 21 stets die maximale Amplitude von 100% (maxwert) aufweist. Bei trockener Windschutzscheibe liegen die Amplituden beider Spannungssignale 21, 21 auf etwa 100%. Falls das Ausgangssignal 34 des Vergleichers 33 von der Referenzspannung U_ref abweicht, wird nur eine der beiden Messstrecken S1, S2 auf unter 100% heruntergeregelt, so dass das Spannungssignal 21 der anderen Strecke nach wie vor auf 100% liegt. Dadurch kann der Wirkungsgrad des erfindungsgemäßen Regensensors 1 entscheidend erhöht werden.

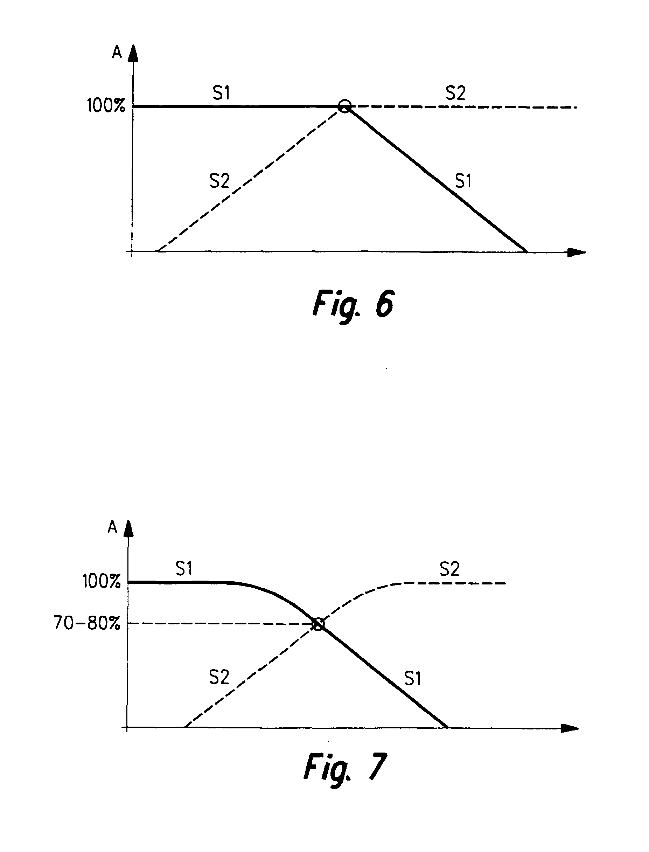

In Figur 7 ist der Verlauf der Amplituden der Spannungssignale von zwei Messstrecken S1, S2 eines aus dem Stand der Technik bekannten Regensensors dargestellt. Die Messstrecken S1, S2 umfassen jeweils einen Sendekreis (von dem Phaseninverter 20 bis zu den Sendeelementen 4; 5) und einen Empfangskreis (von dem Empfangselement 8 bis zu dem Ausgangssignal 34 des Vergleichers 33). Die Amplituden beider Spannungssignale werden bei dem bekannten Regensensor derart geregelt, dass sie bei trockener Windschutzscheibe bei etwa 70% bis 80% der maximalen Amplitude liegen. Falls ein Tropfen auf den Messbereich des Regensensors trifft, wird die Amplitude des einen Spannungssignals nach oben und die des anderen nach unten geregelt.

Im Gegensatz dazu liegen bei dem erfindungsgemäßen Regensensor 1 bei trockener Windschutzscheibe die Amplituden der Spannungssignale 21, 21 beider Messstrecken S1, S2 bei etwa 100% (vgl. Figur 6). Falls ein Tropfen auf den Messbereich des Regensensors trifft, wird die Amplitude des einen Spannungssignals 21 nach unten und die des anderen nach oben geregelt. Gleichzeitig wird der weitere Regler 40 aktiv, der beide Amplituden derart verschiebt, dass eine der Amplituden auf dem maximalen Amplitudenwert (maxwert) bei 100% liegt. In den Figuren 6 und 7 ist der Zustand bei trockener Windschutzscheibe jeweils durch einen Kreis gekennzeichnet.

Das Ausgangssignal 34 des Vergleichers 33 wird an einen Fensterdiskriminator 35 geführt, dessen Ausgangssignal 36 dann einem Steuergerät des Kraftfahrzeugs zur weiteren Auswertung zugeführt wird. Der Fensterdiskriminator 35 vergleicht das Ausgangssignal 34 des Vergleichers 33 mit einer Schwelle oberhalb der Referenzspannung U_ref und mit einer Schwelle unterhalb der Referenzspannung U_ref. Das Ausgangssignal 36 des Fensterdiskriminators 35 ist bspw. ein Rechtecksignal, das den Wert LOW hat, falls das Ausgangssignal 34 des Vergleichers 33 unterhalb der oberen Schwelle und oberhalb der unteren Schwelle liegt. Falls das Ausgangssignal 34 die obere Schwelle überschreitet bzw. die untere Schwelle unterschreitet, nimmt das Ausgangssignal 36 des Diskriminators 35 den Wert HIGH an. Die Rechteckform des Ausgangssignals 36 des Diskriminators 35 führt zu keinerlei Funkstörungen, da es eine sehr niedrige Frequenz aufweist. Der PID-Regler 31 weist ein Tiefpassverhalten auf und regelt das Ausgangssignal 34 relativ langsam (innerhalb mehrerer Sekunden) auf die Referenzspannung U_ref, so dass Abweichungen des Ausgangssignals 34 durch Reflexionsänderungen in den Messstrecken durch auftreffende Regentropfen von der Referenzspannung U_ref sicher detektiert werden können.

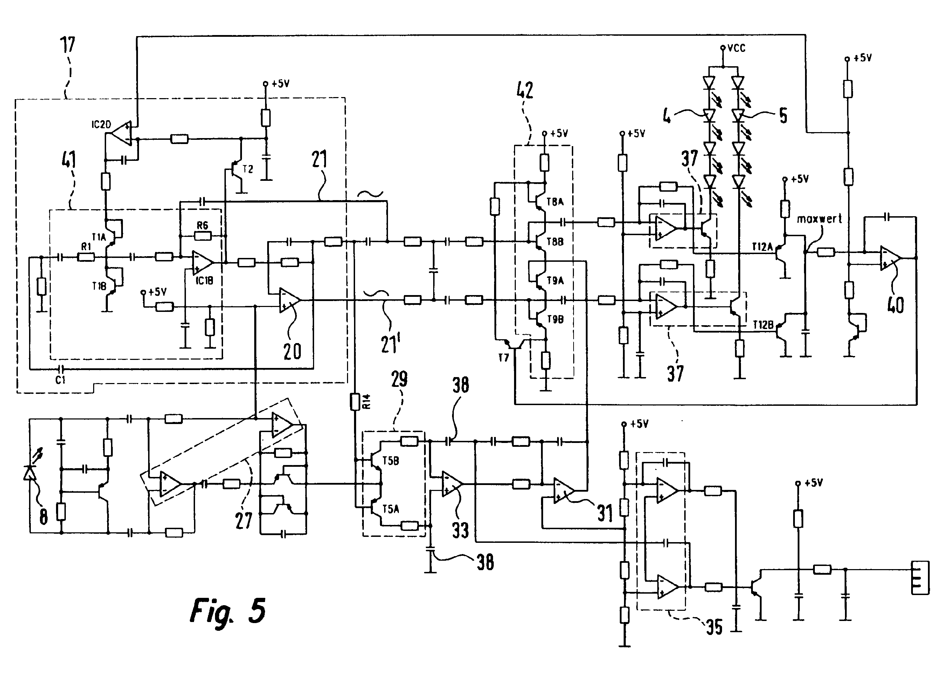

In Figur 5 ist ein Schaltplan des erfindungsgemäßen Regensensors 1 aus Figur 4 dargestellt. Die Bauteile und Schaltungskomponenten sind mit den entsprechenden Bezugszeichen aus Figur 4 bezeichnet, so dass eine Zuordnung leicht möglich ist. Die Versorgungsspannung 18 beträgt +5V. Nachfolgend wird auf einige Bauteile des Schaltplans aus Figur 5 gesondert eingegangen. Der Sinusgenerator 17 umfasst eine Verstärkerschaltung 41, deren Verstärkungsfaktor f sich aus dem Quotient der Widerstände R6 und R1 ergibt (f = R6 /R1). Die Regelstrecke der Oszillatoramplitude wird aus einem Transistor T2, einem Operationsverstärker IC2D und den Transistoren T1A, T1B gebildet. Der Synchrondemodulator 29 besteht aus zwei Transistoren T5A, T5B, die über einen Widerstand R14 mit einer sinusförmigen Schaltspannung 19 angesteuert werden.

Die Regelstrecke zur Amplitudenregelung der Signale 21, 21 zueinander ist mit dem Bezugszeichen 42 bezeichnet und besteht aus den vier Transistoren T8A, T8B, T9A und T9B. Die Regelung auf den Maximalwert 100% (maxwert) wird mit zwei Transistoren T12A, T12B, dem Operationsverstärker IC2A 40 und einem Transistor T7 gebildet.

## Patentansprüche

1. Regensensor (1) zur Detektion von Feuchtigkeitstropfen (2) innerhalb eines Bereichs auf einer lichtdurchlässigen Scheibe (3), mit mindestens einem Sendeelement (4, 5) zum Aussenden optischer Strahlen (6, 7) in die Scheibe (3) und mit mindestens einem Empfangselement (8) zum Empfangen zumindest eines Teils (9, 10) der ausgesandten optischen Strahlen (6, 7), wobei die Intensität der empfangenen optischen Strahlen (9, 10) abhängig ist von der Anzahl der Feuchtigkeitstropfen (2) in dem von dem Regensensor (1) betrachteten Bereich der Scheibe (3), **dadurch gekennzeichnet, dass** der Regensensor (1) Mittel (17) zum Erzeugen eines elektrischen Signals, das einen geringeren Oberwellenanteil als Rechtecksignale aufweist, vorzugsweise eines sinusförmigen elektrischen Signals (19), zur Versorgung des oder jeden Sendeelements (4, 5) des Regensensors (1) aufweist.

2. Regensensor (1) nach Anspruch 1, **dadurch gekennzeichnet, dass** der Regensensor (1) mehrere Sendeelemente (4, 5), die zu zwei Messstrecken (S1, S2) zusammengefasst sind, und einen Vergleicher (33) zum Vergleich der Intensität der von dem oder jedem Empfangselement (8) empfangenen optischen Strahlen (9, 10) der beiden Messstrecken (S1, S2) relativ zueinander aufweist.

3. Regensensor (1) nach Anspruch 2, **dadurch gekennzeichnet, dass** der Regensensor (1) einen Spannungsteiler (20) zum Teilen des sinusförmigen elektrischen Signals (19) in zwei sinusförmige elektrische Signale (21, 21) zur Versorgung der Sendeelemente (4, 5) der beiden Messstecken (S1, S2) aufweist.

4. Regensensor (1) nach Anspruch 3, **dadurch gekennzeichnet, dass** der Regensensor (1) einen ersten Regler (31) zur Regelung der Amplitude der einzelnen sinusförmigen elektrischen Signale (21, 21) derart, dass die Ausgangssignale (30, 30) der beiden Messstrecken (S1, S2) keine Differenz zueinander aufweisen.

5. Regensensor (1) nach Anspruch 4, **dadurch gekennzeichnet, dass** der erste Regler (31) als ein PID-Regler ausgebildet ist.

6. Regensensor (1) nach einem der Ansprüche 3 bis 5, **dadurch gekennzeichnet, dass** der Spannungsteiler (20) Mittel zum Verschieben der Phasen der beiden sinusförmigen elektrischen Signale (21, 21) um 180 Winkelgrad aufweist.

7. Regensensor (1) nach einem der Ansprüche 1 bis 7, **dadurch gekennzeichnet, dass** der Regensensor (1) einen weiteren Regler (40) zur gemeinsamen Regelung beider Amplituden der sinusförmigen elektrischen Signale (21, 21) derart, dass zumindest eines der elektrischen Signale (21, 21) stets eine vorgebbare maximale Amplitude (maxwert) aufweist.

8. Regensensor (1) nach Anspruch 7, **dadurch gekennzeichnet, dass** der Regelkreis mit dem weiteren Regler (40) dem Regelkreis mit dem ersten Regler (31) überlagert ist.

9. Regensensor (1) nach einem der Ansprüche 1 bis 8, **dadurch gekennzeichnet, dass** der Regensensor (1) ein Empfangselement (8) zum Empfangen zumindest eines Teils (9, 10) der von dem oder jedem Sendeelement (4, 5) ausgesandten optischen Strahlen (6, 7) aufweist.

10. Regensensor (1) nach einem der Ansprüche 2 bis 9, **dadurch gekennzeichnet, dass** der Regensensor (1) einen Fensterdiskriminator (35) zur Detektion von Abweichungen des Ausgangssignals (34) des Vergleichers (33) von dem konstanten Wert (U_ref) und zur Ausgabe eines entsprechenden Ausgangssignals (36) des Regensensors (1) aufweist.

11. Regensensor (1) nach einem der Ansprüche 8 bis 10, **dadurch gekennzeichnet, dass** der Regensensor (1) einen Synchrondemodulator (29) aufweist, der das von dem Empfangselement (8) empfangene Signal (28) in zwei Differenzsignale (30, 30) aufteilt, wobei jedes der Signale (30, 30) bestimmte Halbwellen des empfangenen Signals (28) umfasst.

12. Regensensor (1) nach Anspruch 11, **dadurch gekennzeichnet, dass** der Regensensor (1) Integratoren (38) zum Aufintegrieren der Differenzsignale (30, 30) aufweist.

13. Regensensor (1) nach einem der Ansprüche 1 bis 12, **dadurch gekennzeichnet, dass** der Regensensor (1) acht Sendeelemente (4, 5) aufweist, die zu zwei Messstrecken (S1, S2) zusammengefasst sind und um ein zentral angeordnetes Empfangselement (8) in einem bestimmten Radius angeordnet sind.

14. Regensensor (1) nach einem der Ansprüche 1 bis 13, **dadurch gekennzeichnet, dass** das oder jedes Sendeelement (4, 5) als eine Lumineszenzdiode (LED) ausgebildet ist.

15. Regensensor (1) nach einem der Ansprüche 1 bis 14, **dadurch gekennzeichnet, dass** das oder jedes Empfangselement (8) als eine Lumineszenzdiode (LED) ausgebildet ist.

16. Regensensor (1) nach einem der Ansprüche 1 bis 15, **dadurch gekennzeichnet, dass** die optischen Strahlen (6, 7, 9, 10) als Infrarot (IR)-Strahlen ausgebildet sind.

17. Regensensor (1) nach einem der Ansprüche 11 bis 16, **dadurch gekennzeichnet, dass** der Synchrondemodulator (29) zwei mit einer sinusförmigen Schaltspannung (19) ansteuerbare Transistoren aufweist.

18. Verfahren zum Betrieb eines Regensensors (1) zur Detektion von Feuchtigkeitstropfen (2) innerhalb eines Bereichs auf einer lichtdurchlässigen Scheibe (3), mit mindestens einem Sendeelement (4, 5) zum Aussenden optischer Strahlen (6, 7) in die Scheibe (3) und mit mindestens einem Empfangselement (8) zum Empfangen zumindest eines Teils (9, 10) der ausgesandten optischen Strahlen (6, 7), wobei die Intensität der empfangenen optischen Strahlen (9, 10) abhängig ist von der Anzahl der Feuchtigkeitstropfen (2) in dem von dem Regensensor (1) betrachteten Bereich der Scheibe (3), **dadurch gekennzeichnet, dass** das oder jedes Sendeelement (4, 5) des Regensensors (1) von einem elektrischen Signal, das einen geringeren Oberwellenanteil als Rechtecksignale aufweist, versorgt wird.

19. Verfahren nach Anspruch 18, **dadurch gekennzeichnet, dass** das oder jedes Sendeelement (4, 5) des Regensensors (1) von einem sinusförmigen elektrischen Signal (19) versorgt wird.

20. Verfahren nach Anspruch 18 oder 19, **dadurch gekennzeichnet, dass** alle Signale (19, 21, 21, 23, 25, 26, 28, 30, 30, 32, 32, 34) in dem Regensensor (1) als Signale mit einem geringeren Oberwellenanteil als Rechtecksignale ausgebildet sind.

21. Verfahren nach Anspruch 20, **dadurch gekennzeichnet, dass** alle Signale (19, 21, 21, 23, 25, 26, 28, 30, 30 32, 32, 34) in dem Regensensor (1) als sinusförmige Signale ausgebildet sind.

## Claims

1. Rain sensor (1) for detecting drops of moisture (2) within an area on a transparent window (3), comprising at least one transmitting element (4, 5) for emitting optical rays (6, 7) into the window (3), and at least one receiving element (8) for receiving at least some (9, 10) of the emitted optical rays (6, 7), wherein the intensity of the received optical rays (9, 10) is dependent on the number of drops of moisture (2) in the area of the window (3) observed by the rain sensor (1), **characterised in that** the rain sensor (1) comprises means (17) for generating an electrical signal which has a lower harmonic content than square-wave signals, preferably a sinusoidal electrical signal (19), for powering the or each transmitting element (4, 5) of the rain sensor (1).

2. Rain sensor (1) according to claim 1, **characterised in that** the rain sensor (1) comprises a plurality of transmitting elements (4, 5) which are grouped into two measurement paths (S1, S2), and a comparator (33) for comparing the intensity of the optical rays (9, 10) from the two measurement paths (S1, S2) which are received by the or each receiving element (8).

3. Rain sensor (1) according to claim 2, **characterised in that** the rain sensor (1) comprises a voltage divider (20) for dividing the sinusoidal electrical signal (19) into two sinusoidal electrical signals (21, 21) for powering the transmitting elements (4, 5) of the two measurement paths (S1, S2).

4. Rain sensor (1) according to claim 3, **characterised in that** the rain sensor (1) comprises a first controller (31) for adjusting the amplitude of the individual sinusoidal electrical signals (21, 21) in such a way that the output signals (30, 30) of the two measurement paths (S1, S2) are not different from one another.

5. Rain sensor (1) according to claim 4, **characterised in that** the first controller (31) is designed as a PID controller.

6. Rain sensor (1) according to one of claims 3 to 5, **characterised in that** the voltage divider (20) comprises means for shifting the phases of the two sinusoidal electrical signals (21, 21) by 180 degrees.

7. Rain sensor (1) according to one of claims 1 to 7, **characterised in that** the rain sensor (1) comprises a further controller (40) for jointly adjusting both amplitudes of the sinusoidal electrical signals (21, 21) in such a way that at least one of the electrical signals (21, 21) always has a predefinable maximum amplitude (maxwert).

8. Rain sensor (1) according to claim 7, **characterised in that** the control loop comprising the further controller (40) is superposed on the control loop comprising the first controller (31).

9. Rain sensor (1) according to one of claims 1 to 8, **characterised in that** the rain sensor (1) comprises a receiving element (8) for receiving at least some (9, 10) of the optical rays (6, 7) emitted by the or each transmitting element (4, 5).

10. Rain sensor (1) according to one of claims 2 to 9, **characterised in that** the rain sensor (1) comprises a window discriminator (35) for detecting deviations of the output signal (34) of the comparator (33) from the constant value (U_ref) and for outputting a corresponding output signal (36) of the rain sensor (1).

11. Rain sensor (1) according to one of claims 8 to 10, **characterised in that** the rain sensor (1) comprises a synchronous demodulator (29) which divides the signal (28) received by the receiving element (8) into two differential signals (30, 30), wherein each of the signals (30, 30) comprises certain half-waves of the received signal (28).

12. Rain sensor (1) according to claim 11, **characterised in that** the rain sensor (1) comprises integrators (38) for integrating upwards the differential signals (30, 30).

13. Rain sensor (1) according to one of claims 1 to 12, **characterised in that** the rain sensor (1) comprises eight transmitting elements (4, 5) which are grouped into two measurement paths (S1, S2) and arranged at a certain radius around a central receiving element (8).

14. Rain sensor (1) according to one of claims 1 to 13, **characterised in that** the or each transmitting element (4, 5) is designed as a light-emitting diode (LED).

15. Rain sensor (1) according to one of claims 1 to 14, **characterised in that** the or each receiving element (8) is designed as a light-emitting diode (LED).

16. Rain sensor (1) according to one of claims 1 to 15, **characterised in that** the optical rays (6, 7, 9, 10) are designed as infrared (IR) rays.

17. Rain sensor (1) according to one of claims 11 to 16, **characterised in that** the synchronous demodulator (29) comprises two transistors which can be driven by a sinusoidal switching voltage (19).

18. Method of operating a rain sensor (1) for detecting drops of moisture (2) within an area on a transparent window (3), comprising at least one transmitting element (4, 5) for emitting optical rays (6, 7) into the window (3), and at least one receiving element (8) for receiving at least some (9, 10) of the emitted optical rays (6, 7), wherein the intensity of the received optical rays (9, 10) is dependent on the number of drops of moisture (2) in the area of the window (3) observed by the rain sensor (1), **characterised in that** the or each transmitting element (4, 5) of the rain sensor (1) is powered by an electrical signal which has a lower harmonic content than square-wave signals.

19. Method according to claim 18, **characterised in that** the or each transmitting element (4, 5) of the rain sensor (1) is powered by a sinusoidal electrical signal (19).

20. Method according to claim 18 or 19, **characterised in that** all the signals (19, 21, 21, 23, 25, 26, 28, 30, 30, 32, 32, 34) in the rain sensor (1) are designed as signals having a lower harmonic content than square-wave signals.

21. Method according to claim 20, **characterised in that** all the signals (19, 21, 21, 23, 25, 26, 28, 30, 30, 32, 32, 34) in the rain sensor (1) are designed as sinusoidal signals.

## Revendications

1. Capteur de pluie (1) pour la détection de gouttes d'humidité (2) à l'intérieur d'une zone sur une vitre translucide (3), comportant au moins un élément émetteur (4, 5) pour l'émission de rayons optiques (6, 7) dans la vitre (3) et au moins un élément récepteur (8) pour la réception d'au moins une partie (9, 10) des rayons optiques émis (6, 7), l'intensité des rayons optiques reçus (9, 10) dépendant du nombre de gouttes d'humidité (2) dans la zone de la vitre (3) considérée par le capteur de pluie (1), **caractérisé en ce que** le capteur de pluie (1) possède des moyens (17) pour la génération d'un signal électrique, qui possède un taux d'ondes harmoniques plus faible que les signaux rectangulaires, de préférence d'un signal électrique sinusoïdal (19), pour l'alimentation de l'élément émetteur ou de chaque élément émetteur (4, 5) du capteur de pluie (1).

2. Capteur de pluie (1) selon la revendication 1, **caractérisé en ce que** le capteur de pluie (1) possède plusieurs éléments émetteurs (4, 5), qui sont regroupés en deux voies de mesure (S1, S2), et un comparateur (33) pour la comparaison de l'intensité des rayons optiques (9, 10) des deux voies de mesure (S1, S2) reçus par l'élément récepteur ou par chaque élément récepteur (8), l'une par rapport à l'autre.

3. Capteur de pluie (1) selon la revendication 2, **caractérisé en ce que** le capteur de pluie (1) possède un diviseur de tension (20) pour la division du signal électrique sinusoïdal (19) en deux signaux électriques sinusoïdaux (21, 21) pour l'alimentation des éléments émetteurs (4, 5) des deux voies de mesure (S1, S2).

4. Capteur de pluie (1) selon la revendication 3, **caractérisé en ce que** le capteur de pluie (1) possède un premier régulateur (31) pour le réglage de l'amplitude des différents signaux électriques sinusoïdaux (21, 21) de façon à ce que les signaux de sortie (30, 30) des deux voies de mesure (S1, S2) ne présentent pas de différence entre elles.

5. Capteur de pluie (1) selon la revendication 4, **caractérisé en ce que** le premier régulateur (31) est un régulateur PID.

6. Capteur de pluie (1) selon une des revendications 3 à 5, **caractérisé en ce que** le diviseur de tension (20) possède des moyens pour le décalage des phases des deux signaux électriques sinusoïdaux (21, 21) de 180 degrés.

7. Capteur de pluie (1) selon une des revendications 1 à 7, **caractérisé en ce que** le capteur de pluie (1) possède un régulateur supplémentaire (40) pour le réglage commun des deux amplitudes des signaux électriques sinusoïdaux (21, 21) de façon à ce qu'au moins un des signaux électriques (21, 21) possède toujours une amplitude prescrite maximale (valeur max.).

8. Capteur de pluie (1) selon la revendication 7, **caractérisé en ce que** le circuit de régulation comportant le régulateur supplémentaire (40) est superposé au circuit de régulation comportant le premier régulateur (31).

9. Capteur de pluie (1) selon une des revendications 1 à 8, **caractérisé en ce que** le capteur de pluie (1) possède un élément récepteur (8) pour la réception d'au moins une partie (9, 10) des rayons optiques (6, 7) émis par l'élément émetteur ou par chaque élément émetteur (4, 5).

10. Capteur de pluie (1) selon une des revendications 2 à 9, **caractérisé en ce que** le capteur de pluie (1) possède un discriminateur à fenêtre (35) pour la détection d'écarts du signal de sortie (34) du comparateur (33) par rapport à la valeur constante (U_ref) et pour la délivrance d'un signal de sortie (36) correspondant du capteur de pluie (1).

11. Capteur de pluie (1) selon une des revendications 8 à 10, **caractérisé en ce que** le capteur de pluie (1) possède un démodulateur synchrone (29), qui répartit le signal (28) reçu par l'élément récepteur (8) en deux signaux différentiels (30, 30), chacun des signaux (30, 30) comprenant des demi-ondes données du signal reçu (28).

12. Capteur de pluie (1) selon la revendication 11, **caractérisé en ce que** le capteur de pluie (1) possède des intégrateurs (38) pour l'intégration des signaux différentiels (30, 30).

13. Capteur de pluie (1) selon une des revendications 1 à 12, **caractérisé en ce que** le capteur de pluie (1) possède huit éléments émetteurs (4, 5), qui sont regroupés en deux voies de mesure (S1, S2), et disposés dans un rayon donné autour d'un élément récepteur (8) disposé de manière centrale.

14. Capteur de pluie (1) selon une des revendications 1 à 13, **caractérisé en ce que** l'élément émetteur ou chaque élément émetteur (4, 5) est une diode électroluminescente (LED).

15. Capteur de pluie (1) selon une des revendications 1 à 14, **caractérisé en ce que** l'élément récepteur ou chaque élément récepteur (8) est une diode électroluminescente (LED).

16. Capteur de pluie (1) selon une des revendications 1 à 15, **caractérisé en ce que** les rayons optiques (6, 7, 9, 10) sont des rayons infrarouges (IR).

17. Capteur de pluie (1) selon une des revendications 11 à 16, **caractérisé en ce que** le démodulateur synchrone (29) possède deux transistors excités par une tension d'enclenchement sinusoïdale (19).

18. Procédé de fonctionnement d'un capteur de pluie (1) pour la détection de gouttes d'humidité (2) à l'intérieur d'une zone sur une vitre translucide (3), comportant au moins un élément émetteur (4, 5) pour l'émission de rayons optiques (6, 7) dans la vitre (3) et avec au moins un élément récepteur (8) pour la réception d'au moins une partie (9, 10) des rayons optiques émis (6, 7), l'intensité des rayons optiques reçus (9, 10) dépendant du nombre de gouttes d'humidité (2) dans la zone de la vitre (3) considérée par le capteur de pluie (1), **caractérisé en ce que** l'élément émetteur ou chaque élément émetteur (4, 5) du capteur de pluie (1) est alimenté par un signal électrique, qui possède un taux d'ondes harmoniques plus faible que les signaux rectangulaires.

19. Procédé selon la revendication 18, **caractérisé en ce que** l'élément émetteur ou chaque élément émetteur (4, 5) du capteur de pluie (1) est alimenté par un signal électrique sinusoïdal (19).

20. Procédé selon la revendication 18 ou 19, **caractérisé en ce que** tous les signaux (19, 21, 21, 23, 25, 26, 28, 30, 30, 32, 32, 34) dans le capteur de pluie (1) sont des signaux avec un taux d'ondes harmoniques plus faible que les signaux rectangulaires.

21. Procédé selon la revendication 20, **caractérisé en ce que** tous les signaux (19, 21, 21, 23, 25, 26, 28, 30, 30, 32, 32, 34) dans le capteur de pluie (1) sont des signaux sinusoïdaux.
